Europäisches Patentamt

European Patent Office

Office européen des brevets

(19)

(11) **EP 1 138 041 B1**

(12) ## EUROPÄISCHE PATENTSCHRIFT

(45) Veröffentlichungstag und Bekanntmachung des Hinweises auf die Patenterteilung:
**19.02.2003 Patentblatt 2003/08**

(51) Int Cl.⁷: **G11B 27/28**, H04N 5/14, G06F 17/30

(21) Anmeldenummer: **99968301.4**

(22) Anmeldetag: **10.12.1999**

(86) Internationale Anmeldenummer:
**PCT/DE99/04028**

(87) Internationale Veröffentlichungsnummer:
**WO 00/034953 (15.06.2000 Gazette 2000/24)**

(54) **VERFAHREN ZUR TRENNUNG VON AUF MEDIEN WIE LAUFBILDFILMEN, VIDEOBÄNDERN ODER DERGLEICHEN GESPEICHERTEN BILDFOLGEN IN EINZELSEQUENZEN**

METHOD FOR SEPARATING IMAGE SEQUENCES STORED ON SUPPORTS SUCH AS MOTION-PICTURE FILM, VIDEO TAPE OR SUCH LIKE INTO INDIVIDUAL SEQUENCES

PROCEDE POUR SEPARER DES SEQUENCES D'IMAGES MEMORISEES SUR DES SUPPORTS TELS QUE DES FILMS, DES BANDES VIDEO OU SIMILAIRES, EN SEQUENCES INDIVIDUELLES

(84) Benannte Vertragsstaaten:
**DE FR GB IT**

(30) Priorität: **10.12.1998 DE 19859087**

(43) Veröffentlichungstag der Anmeldung:
**04.10.2001 Patentblatt 2001/40**

(73) Patentinhaber: **ARNOLD & RICHTER CINE TECHNIK GMBH & CO. BETRIEBS KG 80799 München (DE)**

(72) Erfinder: **BEUTLHAUSER, Roland D-81825 München (DE)**

(74) Vertreter: **Ninnemann, Detlef, Dipl.-Ing. et al Patentanwälte Maikowski & Ninnemann, Postfach 15 09 20 10671 Berlin (DE)**

(56) Entgegenhaltungen:
**EP-A- 0 729 117**       **EP-A- 0 780 776**
**WO-A-98/34182**       **US-A- 5 537 530**
**US-A- 5 828 786**

EP 1 138 041 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Trennung von auf Medien wie Laufbildfilmen, Videobändern oder dergleichen gespeicherten Bildfolgen in Einzelsequenzen.

Es ist bekannt, aufeinanderfolgende Szenen eines Laufbildfilmes oder Videobandes manuell in Einzelsequenzen-aufzuteilen, um diese Einzelsequenzen. dann ggf. in anderer Reihenfolge zusammenzusetzen, zu verwerfen oder zu speichern. Der Beginn einer Einzelsequenz wird dabei üblicherweise durch ein einzelnes oder mehrere Startbilder ausgelöst, beispielsweise durch die Aufnahme einer Filmklappe mit darauf notierter Zuordnung.

Die Bildfolgen können auf unterschiedlichen Aufnahmemedien enthalten sein, wie Laufbildfilmen, Videobändern, elektronischen Speichermedien wie CDs oder dergleichen. In vielen Anwendungsfällen erfolgt eine parallele Aufnahme auf Laufbildfilmen und einem elektronischen speichermedium, wobei die elektronisch gespeicherte Bildfolge aus einem optischen Strahlengang einer Laufbildkamera ausgespiegelt und über einen Videochip oder eine Videokamera in Videosignale umgesetzt wird, die auf dem elektronischen Speichermedium gespeichert werden.

Aus der US-A-5,537,530 ist ein Verfahren zur Trennung von auf Videobändern gespeicherten Bildfolgen in Einzelsequenzen bekannt, bei dem Sequenzwechsel erster Art, die auf einer Änderung der mittleren Helligkeit aufeinanderrolgender Bilder beruhen, die ein vorgegebenes Maß über- oder unterschreiten sowie Sequenzwechsel zweiter Art, die auf einer Änderung des Bildinhalts aufeinanderfolgender Bilder beruhen, erfaßt und Trennmarken zur automatischen Trennung der Bildsequenzen in Einzelsequenzen gesetzt werden.

In zahlreichen Anwendungsfällen ist eine automatische Trennung insbesondere digitalisierter Filme in Einzelsequenzen erwünscht, ohne daß eine manuelle Trennung oder die Aufnahme von Starthildern zur Einleitung einer Einzelsequenz erforderlich ist. Insbesondere im medizinischen Bereich ist eine solche automatische Trennung digitalisierter Filme in Einzelsequenzen wünschenswert, um unmittelbar nach einer Aufnahme der Bildfolgen Einzelsequenzen zur Diagnose zur Verfügung zu stellen. Dabei kommt es in entscheidendem Maße darauf an, daß zum einen bei der automatischen Trennung keine Bilder verlorengehen und daß zum anderen eine hohe Erkennungsrate zur Auflösung der Bildfolge in Einzelseguenzen erzielt wird.

Aufgabe der vorliegenden Erfindung ist es, ein Verfahren zur automatischen Trennung, insbesondere digitalisierter Laufbildfilme, Videoaufnahmen oder dergleichen anzugeben, das eine größtmögliche Erkennungsrate der Einzelsequenzen sicherstellt und gewährleistet, daß keine Bilder bei der Anwendung des Trennverfahrens verlorengehen.

Diese Aufgabe wird erfindungsgemäß durch die Merkmale des Anspruchs 1 gelöst.

Die erfindungsgemäße Lösung stellt zum einen eine höchstmögliche Erkennungsrate sicher und gewährleistet zum anderen den Erhalt sämtlicher Bilder der Bildfolgen eines Laufbildfilmes, Videobandes oder dergleichen.

Die erfindungsgemäße Lösung eignet sich insbesondere zur Realisierung in einer Datenverarbeitungseinrichtung mit entsprechenden Hardware-Komponenten und kann sowohl für Einzelplatzanwendungen als auch in vernetzten Systemen sowie für Datenfernübertragungen eingesetzt werden.

Vorteilhafte Ausgestaltungen des erfindungsgemäßen Verfahrens sind den Merkmalen der Unteransprüche zu entnehmen.

In der praktischen Anwendung erweist es sich als vorteilhaft, ein ausgewähltes Einzelbild, vorzugsweise das jeweils erste Einzelbild, einer Einzelsequenz als Ikone auf einem Monitor darzustellen, so daß durch Anklicken der Ikone die betreffende Einzelsequenz gestartet werden kann. Durch aufeinanderfolgendes Anklicken mehrerer Ikonen kann eine Folge von Einzelsequenzen zur Ansicht gestartet werden.

Anhand eines Ausführungsbeispieles soll der der Erfindung zugrunde liegende Gedanke nachfolgend näher erläutert werden.

Für die Anwendung des erfindungsgemäßen Verfahrens und der daraus abgeleiteten Software zur automatischen Trennung digitalisierter kardiologischer Filme in Einzelsequenzen werden in dem Ausführungsbeispiel als Medien 35mm-Laufbildfilme und S-VHS Videobänder verwendet. Auf diesen Medien sind insgesamt drei Arten von Sequenzwechseln zu beobachten:

1. Auf 35mm-Laufbildfilm (negativ) zwei bis drei nahezu weiße Bilder, oftmals bis zu drei solcher Sequenzwechsel in kurzen Abständen (ca. drei Bilder) hintereinander;

2. Auf Videoband bis zu 30 nahezu schwarze Bilder;

3. Auf Videoband am Sequenzende 10 bis 15 - abgesehen vom Rauschen - identische Einzelbilder, dann Start der nächsten Sequenz ohne besonders markierte Zwischenbilder.

Die beiden ersten Sequenzwechsel werden nachfolgend als Sequenzwechsel erster Art und der dritte Sequenzwechsel als Sequenzwechsel zweiter Art bezeichnet. Diese Sequenzwechsel erster und zweiter Art werden wie folgt behandelt:

Sequenzwechsel erster Art, die auf einer starken Änderung der mittleren Helligkeit basieren, können sehr zuverlässig erkannt werden, bei gutem Bildmaterial kann eine Erkennungsrate von 100 % erreicht werden.

Die Trennung erfolgt durch das Setzen von Trennmarken ersten und zweiten Typs für Sequenzwechsel erster und zweiter Art. Eine Trennmarke ersten Typs ist eine vorgegebene Anzahl aufeinanderfolgender Schwarz- oder Weißbilder. Die als Trennmarken erkannten Bilder werden selbst nicht abgespeichert. Das erste Bild nach der Trennmarke ist auch das erste Bild der nächsten Sequenz. Die Sequenzen selbst müssen mindestens eine vorgegebene Anzahl von Bildern enthalten, sonst werden sie erworfen.

Sequenzwechsel zweiter Art, die auf einer Änderung des Bildinhaltes basieren, sind wesentlich schwerer zu erkennen, da die Größe der Änderung variiert und auch innerhalb einer Sequenz große Abweichungen zwischen aufeinanderfolgenden Bildern vorkommen können. In vielen Anwendungsfällen wird nur eine Erkennungsrate von ca. 75 % erreicht, d.h. nicht alle Sequenzwechsel werden als solche erkannt und gelegentlich wird eine Trennung innerhalb einer Sequenz vorgenommen. Es wird jedoch sichergestellt, daß keine Bilder verlorengehen.

Die Trennung erfolgt nach Maßgabe der folgenden Regeln:

a) Eine Trennmarke zweiten Typs ist ein Bild, dessen Inhalt sich von den Inhalten der vorangegangenen Bilder stark unterscheidet;

b) Trennmarken ersten Typs haben immer Vorrang;

c) Trennmarken zweiten Typs, die sich innerhalb eines vorgegebenen Abstandes von Trennmarken ersten Typs befinden, werden nicht berücksichtigt;

d) Trennmarken zweiten Typs werden nicht berücksichtigt, wenn die vorangehende Sequenz nicht mindestens eine vorgegebene Anzahl von Bildern enthält;

e) Das als Trennmarke erkannte Bild ist das erste Bild der nächsten Sequenz.

Zur Einstellung des Verhaltens des automatischen Trennverfahrens werden die wichtigsten, nachstehend angegebenen Parameter sowie die folgenden Dateinamen in einer Datei "Splitter.ini" eingestellt bzw. angegeben:

a) Der Parameter **MeanMinFrames** gibt an, wie viele Bilder die Einzelsequenzen, die von Trennmarken ersten Typs abgeschlossen werden, mindestens enthalten müssen. Kürzere Sequenzen werden verworfen.
Da viele Filme nur sehr kurze Sequenzen mit der Einblendung des Patientennamens (Klappe) enthalten, wird bei einem internen Vorgabewert von 12 und einem Wertebereich > 0 ein Wertebereich für diesen Parameter von 4 bis 6 empfohlen.

b) Der Parameter **MeanSpltFrames** gibt an, aus wie vielen Bildern eine Trennmarke ersten Typs mindestens bestehen muß, damit eine Trennung vorgenommen wird. Der Vorgabewert ist 2, der Wertebereich > 0.

c) Der Parameter **MeanSensitivity** kennzeichnet die Ansprechempfindlichkeit für Trennmarken ersten Typs von gering bis hoch mit einem Wertebereich von 0.0 bis 1.0. Der Wert 0.0 bedeutet keine Prüfung auf dieses Kriterium. Damit der Beginn einer neuen Sequenz, deren Helligkeit sich stark von der der vorangegangenen Sequenz unterscheidet, sicher erkannt werden kann, darf dieser Wert aber nicht zu hoch sein. Innerhalb des vorstehend angegebenen Wertebereichs wird ein Wertebereich von 0,25 bis 0,35 empfohlen.

d) Der Parameter **ChangeMinFrames** gibt an, wie viele Einzelbilder Sequenzen, die von Trennmarken zweiten Typs abgeschlossen werden, mindestens enthalten müssen. Bei kürzeren Sequenzen wird die Trennmarke verworfen. Außerdem werden alle Trennmarken zweiten Typs verworfen, die nicht mindestens diesen Abstand von Trennmarken des ersten Typs haben. Vorzugsweise beträgt der Vorgabewert 12 bei einem Wertebereich > 0.

e) Der Parameter **ChangeSensitivity** kennzeichnet die Ansprechempfindlichkeit für Trennmarken zweiten Typs. Bei einem Wertebereich von 0.0 bis 1.0, wobei der Wert 0.0 keine Prüfung auf dieses Kriterium bedeutet, wird für durchschnittliches Videomaterial der Wert 0.7 empfohlen.

f) Die Datei **SpltDatPath** ("splitmarks.dat") kennzeichnet die Datei, in die eine Liste der Trennmarken geschrieben wird. Sie ist vorzugsweise nur für Debug-Version des Programms gültig.

g) Die Datei **SeqDatPath** ("sequences.dat") bezeichnet die Datei, in der die Sequenzliste abgelegt wird, wenn nicht auf der Kommandozeile ein anderer Dateiname angegeben wurde.

Die automatische Sequenztrennung kann getrennt für jede Videoquelle in einem Setup-Fenster einer Recording Software aktiviert werden. Sie erfolgt nach dem Abspeichern der Rohdaten auf einer Festplatte und vor der weiteren Verarbeitung zu DICOM Datensätzen. Dabei liegt die Verarbeitungsgeschwindigkeit bei ca. 500 bis 1000 Bildern pro Sekunde. In der Datei VIM.IM der Recording Software wird der vollständige Pfadname des Programms "splitter. exe" als Parameter eingetragen.

In einem Standard-Installationsverzeichnis für die Dateien "splitter.exe" und "splitter.ini" werden entsprechend der Voreinstellung folgende Dateien erzeugt:

1. Eine Loggingdatei "splitter.log";

2. Eine Liste der Trennmarken "splitmarks.dat" für eine Debug-Version;

3. Eine Liste der Einzelsequenzen "sequences.dat".

Zur Bildung des Algorithmus wird jedes Bild zunächst bezüglich Trennmarken ersten Typs untersucht. Wird keine solche gefunden, wird nach Trennmarken zweiten Typs gesucht. Nachdem so eine vorläufige Liste aller möglichen Trennmarken angelegt wurde, erfolgt eine Nachbearbeitung zum Bestimmen der Einzelsequenzen.

Mit der Funktion CheckSplitMean werden Trennmarken ersten Typs aufgefunden. Jeweils über die letzten 16 (MEANFRAMES) Bilder wird ein gleitender Mittelwert (MeanMean) der Bildhelligkeiten berechnet. Aus diesem und dem Parameter MeanSensitivity wird ein unterer (LThresh) und oberer (UThresh) Schwellwert wie folgt bestimmt:

$$LThresh = MeanSensitivity * MeanMean$$

$$UTresh = 255 - MeanSensitivity * (255 - MeanMean)$$

Überschreitet der Mittelwert des aktuellen Bildes UThresh, so wird eine Weiß-Trennmarke (SPLT_WHITE) gesetzt, unterschreitet er LThresh, so wird eine Schwarz-Trennmarke (SPLT_BLACK) gesetzt. Die Mittelwerte der Trennmarkenbilder gehen dabei nicht in den gleitenden Durchschnitt ein.

Mit der Funktion CheckSplitChange werden von Trennmarken zweiten Typs aufgefunden, indem zwischen dem aktuellen und dem vorhergehenden Bild die RMS-Abweichung (CurrRmsDiff) der Pixelhelligkeiten berechnet wird. Es wird ein gleitender Mittelwert (MeanRmsDiff) der RMS-Abweichungen über die letzten 16 (MEANFRAMES) Bildwechsel und daraus und aus dem Parameter ChangeSensitivity ein Schwellwert (DiffThresh) wie folgt bestimmt:

$$DiffThresh = (8 - 6 * ChangeSensitivity) * MeanRmsDiff$$

Überschreitet die RMS-Abweichung des aktuellen Bildwechsels den Schwellwert, so wird eine Trennmarke (SPLT_CHANGE) gesetzt. RMS-Abweichungen von Trennmarken zweiten Typs gehen in den gleitenden Mittelwert ein, nicht jedoch solche vom ersten Typ.

Mit der Funktion EvaluateSplit werden die Einzelsequenzen aus der Trennmarkenliste mit folgender Maßgabe bestimmt:

1. Alle Trennmarkensequenzen ersten Typs, die kürzer als die Anzahl MeanSpltFrames Bilder sind, werden verworfen.

2. Alle Trennmarken zweiten Typs, die näher als ChangeMinFrames Bilder an den verbliebenen Trennmarken ersten Typs liegen, werden verworfen.

Die so gebildeten Einzelsequenzen starten

1. mit dem ersten Bild in der Datei oder

2. mit dem ersten Bild nach einer Trennmarke ersten Typs oder

3. mit einer Trennmarke zweiten Typs3.

und enden

1. mit dem letzten Bild in der Datei oder

2. mit dem letzten Bild vor einer Trennmarke ersten Typs, wenn sie mindestens MeanMinFrames Bilder lang ist, sonst wird die Sequenz verworfen, oder

3. mit dem letzten Bild vor einer Trennmarke zweiten Typs, wenn sie mindestens ChangeMinFrames Bilder lang ist. Sonst wird die Trennmarke verworfen.

**Patentansprüche**

1. Verfahren zur Trennung von auf Medien wie Laufbildfilmen, Videobändern oder dergleichen gespeicherten Bildfolgen in Einzelsequenzen, bei welchem Sequenzwechsel zweiter Art, die auf einer pixelbasierten Änderung des Bildinhaltes aufeinanderfolgender Bilder beruhen, erfaßt und Trennmarken zur automatischen Trennung der Bildsequenzen in Einzelsequenzen gesetzt werden
   **dadurch gekennzeichnet,**
   **daß** zusätzlich Sequenzwechsel erster Art erfaßt werden, bei welchen die mittlere Helligkeit des aktuellen Bildes einen Wertebereich, welcher sich aus einem gleitenden Mittelwert der Bildhelligkeiten vorangegangener Bilder, die selber keine Trennmarken sind, berechnet, über- oder unterschreitet, und daß Trennmarken ersten Typs für Sequenzwechsel erster Art und Trennmarken zweiten Typs für Sequenzwechsel zweiter Art gesetzt werden.

2. Verfahren nach Anspruch 1, **dadurch gekennzeichnet, daß** die Sequenzwechsel erster Art aus einer vorgebbaren Anzahl aufeinanderfolgender Einzelbilder im wesentlichen gleicher Helligkeit bestehen.

3. Verfahren nach Anspruch 1, **dadurch gekennzeichnet, daß** die Sequenzwechsel zweiter Art aus einer vorgebbaren Anzahl Einzelbilder mit im wesentlichen übereinst immendem Bildinhalt bestehen.

4. Verfahren nach Anspruch 3, **dadurch gekennzeichnet, daß** ein Sequenzwechsel zweiter Art aus einem Einzelbild besteht, dessen Inhalt sich von den Inhalten vorangegangener Bilder um ein vorgebbares Maß unterscheidet.

5. Verfahren nach mindestens einem der vorangehenden Ansprüche, **dadurch gekennzeichnet, daß** die Bildsequenzen vor der Bestimmung von Sequenzwechseln erster und zweiter Art digitalisiert werden.

6. Verfahren nach mindestens einem der vorangehenden Ansprüche, **dadurch gekennzeichnet, daß** die Bildsequenzen zunächst nach Trennmarken ersten Typs untersucht und bei fehlenden Trennmarken ersten Typs nach Trennmarken zweiten Typs untersucht werden.

7. Verfahren nach Anspruch 6, **dadurch gekennzeichnet, daß** eine vorläufige Liste aller möglichen Trennmarken angelegt wird und daß eine Nachbearbeitung zum Bestimmen der Einzelsequenzen erfolgt.

8. Verfahren nach Anspruch 7, **dadurch gekennzeichnet, daß** Trennmarken ersten Typs vorrangig behandelt werden.

9. Verfahren nach Anspruch 7 oder 8, **dadurch gekennzeichnet, daß** Trennmarken zweiten Typs, die sich innerhalb eines vorgegebenen Abstandes von Trennmarken ersten Typs befinden, verworfen werden.

10. Verfahren nach mindestens einem der vorangehenden Ansprüche 7 bis 9, **dadurch gekennzeichnet, daß** Trennmarken zweiten Typs nur berücksichtigt werden, wenn die vorangegangene Bildsequenz eine vorgegebene Anzahl Einzelbilder enthält.

11. Verfahren nach mindestens einem der vorangehenden Ansprüche, **dadurch gekennzeichnet, daß** Trennmarken, die auf Bildsequenzen beruhen, die eine vorgegebene Anzahl Einzelbilder unterschreiten, verworfen werden.

12. Verfahren nach mindestens einem der vorangehenden Ansprüche, **dadurch gekennzeichnet, daß** Trennmarken ersten Typs aus einer vorgegebenen Anzahl aufeinanderfolgender Schwarz- oder Weißbildern bestehen.

**13.** Verfahren nach mindestens einem der vorangehenden Ansprüche, **dadurch gekennzeichnet, daß** die als Trennmarken erkannten Bilder selbst nicht abgespeichert werden und daß das erste Bild nach der Trennmarke das erste Bild der nächsten Bildsequenz ist.

**14.** Verfahren nach mindestens einem der vorangehenden Ansprüche, **dadurch gekennzeichnet, daß** über eine vorgegebene Anzahl von Einzelbildern ein gleitender Mittelwert der Bildhelligkeiten berechnet und aus dem gleitenden Mittelwert und einem Parameter für die Ansprechempfindlichkeit der Trennmarken ersten Typs ein unterer und oberer Schwellwert bestimmt wird und daß eine Weiß-Trennmarke gesetzt wird, wenn der Mittelwert des aktuellen Bildes den oberen Schwellwert überschreitet und daß eine Schwarz-Trennmarke gesetzt wird, wenn der Mittelwert des aktuellen Bildes den unteren Schwellwert unterschreitet.

**15.** Verfahren nach Anspruch 14, **dadurch gekennzeichnet, daß** die Mittelwerte der als Trennmarken erkannten Bilder nicht in den gleitenden Durchschnitt eingehen.

**16.** Verfahren nach mindestens einem der vorangehenden Ansprüche, **dadurch gekennzeichnet, daß** zum Auffinden von Trennmarken zweiten Typs zwischen dem aktuellen und dem vorhergehenden Bild die RMS-Abweichung der pixelhelligkeiten berechnet wird, daß ein gleitender Mittelwert der RMS-Abweichungen über eine vorgebbare Anzahl vorangegangener Bildwechsel und aus einem die Ansprechempfindlichkeit für Trennmarken zweiten Typs angebenden Parameter ein Schwellwert bestimmt wird, und daß eine Trennmarke gesetzt wird, wenn die RMS-Abweichung des aktuellen Bildwechsels den Schwellwert überschreitet.

**17.** Verfahren nach Anspruch 16, **dadurch gekennzeichnet, daß** RMS-Abweichungen von Trennmarken des zweiten Typs in den gleitenden Mittelwert eingehen, nicht jedoch solche von Trennmarken des ersten Typs.

**18.** Verfahren nach Anspruch 7, **dadurch gekennzeichnet, daß** zum Bestimmen der Einzelsequenzen aus der Liste aller möglichen Trennmarken alle Trennmarkensequenzen mit Trennmarken des ersten Typs verworfen werden, die kürzer sind als die Anzahl Einzelbilder, die erforderlich ist, um eine Trennmarke ersten Typs zu setzen und daß alle Trennmarken zweiten Typs verworfen werden, die näher als die minimale Anzahl von Bildern einer Sequenz, die erforderlich ist, um durch Trennmarken zweiten Typs abgeschlossen zu werden, an den verbliebenen Trennmarken ersten Typs liegen.

**19.** Verfahren nach mindestens einem der vorangehenden Ansprüche, **dadurch gekennzeichnet, daß** eine Sequenz mit dem ersten Bild einer Datei oder mit dem ersten Bild nach einer Trennmarke ersten Typs oder mit einer Trennmarke zweiten Typs startet und mit dem letzetn Bild der Datei oder mit dem letzten Bild vor einer Trennmarke ersten Typs, wenn sie mindestens die Anzahl Einzelbilder erhält, die erforderlich ist, um eine Trennmarke ersten Typs zu setzen, oder mit dem letzten Bild vor einer Trennmarke zweiten Typs, wenn sie mindestens die minimale Anzahl von Bildern einer Sequenz enthält, die erforderlich ist, um durch Trennmarken zweiten Typs abgeschlossen zu werden, endet.

**20.** Verfahren nach mindestens einem der vorangehenden Ansprüche, **dadurch gekennzeichnet, daß** ein ausgewähltes Einzelbild, vorzugsweise das jeweils erste Einzelbild, einer Einzelsequenz als Ikone auf einem Monitor dargestellt wird und daß durch Anklicken der Ikone die Einzelsequenz gestartet wird.

**21.** Verfahren nach Anspruch 20, **dadurch gekennzeichnet, daß** durch Anklicken mehrerer Ikonen eine Folge von Einzelsequenzen zur Ansicht gestartet wird.

**22.** Verwendung des Verfahrens nach mindestens einem der vorangehenden Ansprüche zur automatischen Trennung digitalisierter Filme, insbesondere kardiologischer Filme, in Einzelsequenzen.

**Claims**

**1.** Method for separating image sequences stored on media such as motion-picture films, video tapes or such like into individual sequences, in which sequence changes of a second type which are based on a pixel-based change in the image content of successive images are detected and separation markers for the automatic separation of the image sequences into individual sequences are set,

**characterized**

**in that** in addition sequence changes of a first type are detected, in which sequence changes the mean brightness of the current image exceeds or falls below a value range calculated from a moving mean value of the image brightnesses of preceding images which are not separation markers themselves, and in that separation markers of a first type are set for sequence changes of the first type and separation markers of a second type are set for sequence changes of the second type.

2. Method according to Claim 1, **characterized in that** the sequence changes of the first type comprise a predeterminable number of successive individual images of substantially the same brightness.

3. Method according to Claim 1, **characterized in that** the sequence changes of the second type comprise a predeterminable number of individual images having a substantially corresponding image content.

4. Method according to Claim 3, **characterized in that** a sequence change of the second type comprises an individual image whose content differs from the contents of preceding images by a predeterminable amount.

5. Method according to at least one of the preceding claims, **characterized in that** the image sequences are digitized before the determination of sequence changes of the first and second types.

6. Method according to at least one of the preceding claims, **characterized in that** the image sequences are firstly examined for separation markers of the first type and, in the absence of separation markers of the first type, are examined for separation markers of the second type.

7. Method according to Claim 6, **characterized in that** a provisional list of all possible separation markers is created, and **in that** post-processing is effected in order to determine the individual sequences.

8. Method according to Claim 7, **characterized in that** separation markers of the first type are treated with priority.

9. Method according to Claim 7 or 8, **characterized in that** separation markers of the second type which are situated within a predetermined distance from separation markers of the first type are discarded.

10. Method according to at least one of the preceding Claims 7 to 9, **characterized in that** separation markers of the second type are taken into account only if the preceding image sequence contains a predetermined number of individual images.

11. Method according to at least one of the preceding claims, **characterized in that** separation markers which are based on image sequences which fall below a predetermined number of individual images are discarded.

12. Method according to at least one of the preceding claims, **characterized in that** separation markers of the first type comprise a predetermined number of successive black or white images.

13. Method according to at least one of the preceding claims **characterized in that** the images identified as separation markers are themselves not stored, and **in that** the first image after the separation marker is the first image of the next image sequence.

14. Method according to at least one of the preceding claims, **characterized in that** a moving mean value of the image brightnesses is calculated over a predetermined number of individual images and a lower and an upper peripheral value are determined from the moving mean value and a parameter for the response sensitivity of the separation markers of the first type, and **in that** a white separation marker is set if the mean value of the current image exceeds the upper threshold
value, and **in that** a black separation marker is set if the mean value of the current image falls below the lower threshold value.

15. Method according to Claim 14, **characterized in that** the mean values of the images identified as separation markers do not enter into the moving average.

16. Method according to at least one of the preceding claims, **characterized in that**, in order to find separation markers of the second type between the current and the preceding image, the RMS deviation of the pixel brightnesses is

**EP 1 138 041 B1**

calculated, **in that** a moving mean value of the RMS deviations is determined over a predeterminable number of preceding image changes and a threshold value is determined from a parameter specifying the response sensitivity for separation markers of the second type, and **in that** a separation marker is set if the RMS deviation of the current image change exceeds the threshold value.

17. Method according to Claim 16, **characterized in that** RMS deviations of separation markers of the second type enter into the moving mean value, but those of separation markers of the first type do not.

18. Method according to Claim 7, **characterized in that** in order to determine the individual sequences from the list of all possible separation markers there are discarded all separation marker sequences with separation markers of the first type which are shorter than the number of individual images which is necessary in order to set a separation marker of the first type, and **in that** there are discarded all separation markers of the second type which lie nearer to the remaining separation markers of the first type than the minimum number of images of a sequence which is necessary in order to be terminated by separation markers of the second type.

19. Method according to at least one of the preceding claims, **characterized in that** a sequence starts with the first image of a file or with the first image after a separation marker of the first type or with a separation marker of the second type and ends with the last image of the file or with the last image before a separation marker of the first type, if it acquires at least the number of individual images which is necessary in order to set a separation marker of the first type, or with the last image before a separation marker of the second type, if it contains at least the minimum number of images of a sequence which is necessary in order to be terminated by separation markers of the second type.

20. Method according to at least one of the preceding claims, **characterized in that** a selected individual image, preferably the first individual image in each case, of an individual sequence is displayed as an icon on a monitor, and **in that** the individual sequence is started by clicking on the icon.

21. Method according to Claim 20, **characterized in that** a sequence of individual sequences is started for viewing by clicking on a plurality of icons.

22. Use of the method according to at least one of the preceding claims for automatically separating digitized films, in particular cardiological films, into individual sequences.

**Revendications**

1. Procédé pour la séparation de suites d'images en séquences individuelles mémorisées sur des supports tels que des films, des bandes vidéo ou similaires, dans lequel on saisit des changements de séquences de deuxième type, qui reposent sur un changement lié aux pixels du contenu de l'image, et l'on fixe des repères de séparation pour la séparation automatique des séquences d'images en séquences individuelles,
   **caractérisé en ce que** :
   l'on saisit de plus des changements de séquences de premier type, dans lesquelles la luminance moyenne de l'image en cours est au-dessous ou au-dessus d'une plage de valeurs qui est calculée à partir d'une valeur moyenne mobile des luminances des images précédentes qui elles-mêmes ne sont pas des repères de séparation, et **en ce que** sont fixés des repères de séparation de premier type pour des changements de séquence de premier type et des repères de séparation de second type pour des changements de séquence de second type.

2. Procédé selon la revendication 1, **caractérisé en ce que** les changements de séquence de premier type consistent en un nombre pouvant être fixé à l'avance d'images individuelles successives ayant sensiblement la même luminance.

3. Procédé selon la revendication 1, **caractérisé en ce que** les changements de séquence de second type consistent en un nombre pouvant être fixé à l'avance d'images individuelles ayant sensiblement un contenu d'image concordant.

4. Procédé selon la revendication 3, **caractérisé en ce qu'**un changement de séquence de second type consiste en une image individuelle dont le contenu se différencie des contenus des images précédentes dans une mesure

8

pouvant être fixée à l'avance.

5. Procédé selon au moins l'une des revendications précédentes, **caractérisé en ce que** les séquences d'images sont numérisées avant la détermination des changements de séquence de premier et de second type.

6. Procédé selon au moins l'une des revendications précédentes, **caractérisé en ce que** les séquences d'images sont d'abord examinées pour les repères de séparation de premier type et en l'absence de repères de séparation de premier type, pour les repères de séparation de second type.

7. Procédé selon la revendication 6, **caractérisé en ce qu'**il est établi une liste provisoire de tous les repères de séparation possibles et **en ce qu'**il est effectué un retraitement pour déterminer les séquences individuelles.

8. Procédé selon la revendication 7, **caractérisé en ce que** les repères de séparation de premier type sont traités prioritairement.

9. Procédé selon la revendication 7 ou 8, **caractérisé en ce que** l'on rejette les repères de séparation de second type qui se situent à l'intérieur d'une distance prédéterminée des repères de séparation de premier type.

10. Procédé selon au moins l'une des revendications précédentes 7 à 9, **caractérisé en ce que** les repères de séparation de second type ne sont pris en considération que lorsque la séquence d'images précédente contient un nombre prédéterminé d'images individuelles.

11. Procédé selon au moins l'une des revendications précédentes, **caractérisé en ce que** l'on rejette les repères de séparation qui reposent sur des séquences d'images qui sont au-dessous d'un nombre prédéterminé d'images individuelles.

12. Procédé selon au moins l'une des revendications précédentes, **caractérisé en ce que** les repères de séparation de premier type consistent en un nombre prédéterminé d'images successives en noir ou blanc.

13. Procédé selon au moins l'une des revendications précédentes, **caractérisé en ce que** les images proprement dites reconnues comme repères de séparation ne sont pas conservées en mémoire et **en ce que** la première image après le repère de séparation est la première image de la séquence d'images suivante.

14. Procédé selon au moins l'une des revendications précédentes, **caractérisé en ce que** par le biais d'un nombre prédéterminé d'images individuelles on calcule une valeur moyenne mobile des luminances d'image et à partir de la valeur moyenne mobile et d'un paramètre pour la sensibilité de réponse des repères de séparation de premier type, on détermine une valeur de seuil inférieure et supérieure et **en ce qu'**il est fixé un repère de séparation blanc lorsque la valeur moyenne de l'image en cours dépasse la valeur de seuil supérieure et **en ce qu'**il est fixé un repère de séparation noir lorsque la valeur moyenne de l'image en cours est au-dessous de la valeur de seuil inférieure.

15. Procédé selon la revendication 14, **caractérisé en ce que** les valeurs moyennes des images reconnues comme repères de séparation n'entrent pas dans la moyenne mobile.

16. Procédé selon au moins l'une des revendications précédentes, **caractérisé en ce que** pour retrouver des repères de séparation de second type entre l'image en cours et l'image précédente, on calcule l'écart quadratique moyen des luminances de pixels, **en ce que** l'on détermine une valeur moyenne mobile des écarts quadratiques moyens par l'intermédiaire d'un nombre pouvant être prédéterminé de changements d'images précédents et **en ce que** l'on détermine une valeur de seuil à partir d'un paramètre indiquant la sensibilité de réponse pour des repères de séparation de second type, et **en ce que** l'on fixe un repère de séparation lorsque l'écart quadratique moyen du changement d'image en cours dépasse la valeur de seuil.

17. Procédé selon la revendication 16, **caractérisé en ce que** les écarts quadratiques moyens des repères de séparation du second type entrent dans la valeur moyenne mobile, mais non ceux des repères de séparation du premier type.

18. Procédé selon la revendication 7, **caractérisé en ce que**, pour déterminer les séquences individuelles à partir de la liste de tous les repères de séparation possibles, on rejette toutes les séquences de repères de séparation comportant des repères de séparation du premier type qui sont plus courtes que le nombre d'images individuelles qui est nécessaire pour fixer un repère de séparation de premier type et **en ce que** l'on rejette tous les repères de séparation de second type qui se situent plus prés des repères de séparation restants de premier type que le nombre minimum d'images d'une séquence qui est nécessaire pour que celle-ci puisse être close par des repères de séparation de second type.

19. Procédé selon au moins l'une des revendications précédentes, **caractérisé en ce qu'**une séquence commence par la première image d'un fichier ou par la première image après un repère de séparation de premier type ou par un repère de séparation de second type et se termine par la dernière image du fichier ou par la dernière image avant un repère de séparation de premier type, lorsqu'elle contient au moins la quantité d'images individuelles qui est nécessaire pour fixer un repère de séparation de premier type, ou par la dernière image avant un repère de séparation de second type, lorsqu'elle contient au moins le nombre minimum d'images d'une séquence qui est nécessaire pour pouvoir être close par des repères de séparation de second type.

20. Procédé selon au moins l'une des revendications précédentes, **caractérisé en ce qu'**une image individuelle choisie, de préférence chaque fois la première image individuelle d'une séquence individuelle, est représentée sous forme d'icône sur un écran et **en ce qu'**en cliquant sur l'icône on fait démarrer la séquence individuelle.

21. Procédé selon la revendication 20, **caractérisé en ce qu'**en cliquant sur plusieurs icônes on lance l'affichage d'une série de séquences individuelles.

22. Utilisation du procédé selon au moins l'une des revendications précédentes pour la séparation automatique de films numérisés, en particulier de films cardiologiques, en séquences individuelles.